# EUROPÄISCHE PATENTSCHRIFT

(11) **EP 3 001 110 B1**
(45) Veröffentlichungstag und Bekanntmachung des Hinweises auf die Patenterteilung: **11.04.2018**
(21) Anmeldenummer: 15186072.3
(22) Anmeldetag: 21.09.2015
(51) Int. Cl.: F24D 3/14

(54) **FLÄCHENTEMPERIERSYSTEM**
SURFACE TEMPERING SYSTEM
SYSTEME DE CHAUFFAGE SURFACIQUE

(30) Priorität: 26.09.2014 DE 202014104621 U
(43) Veröffentlichungstag der Anmeldung: 30.03.2016
(73) Patentinhaber: Uponor Innovation AB, 73061 Virsbo (SE)
(72) Erfinder: Frieling, Werner, 48432 Rheine (DE)
(74) Vertreter: Epping - Hermann - Fischer

(56) Entgegenhaltungen:
- WO-A1-83/01992
- DE-A1- 3 201 927
- DE-A1- 10 156 641
- DE-U1- 20 302 529
- DE-U1-202008 004 383
- DE-U1-202014 101 286
- GB-A- 2 492 146

## Beschreibung

Die vorliegende Erfindung betrifft ein Flächentemperiersystem zur Kühlung oder Heizung von Decken, Wänden oder Böden eines Gebäudes.

Aus der DE 32 01 927 A1 ist ein Flächentemperiersystem gemäß dem Oberbegriff des Anspruchs 1 mit niedriger Aufbauhöhe für den nachträglichen Einbau bekannt. Aus der DE 20 2014 101 289 U1 ist eine Flauschfolie einer Flächenheizung bekannt. Aus der DE 203 02 529 U1 ist ein Warmwasser-Flächenheizungselement aus Fermacell bekannt. Aus der DE 101 56 641 A1 ist eine Verlegeschiene für die Halterung von Rohren einer Warmwasser-Fußbodenheizung bekannt. Aus der GB 2 492 146 A und der WO 83/01992 A1 sind Heizelemente für Fußbodenheizungen bekannt.

Flächentemperiersysteme erlauben im Gegensatz zu konventionellen Systemen Raum- und Bauteilflächen wie Böden, Wände und Decken sowohl zum Heizen wie zum Kühlen zu nutzen. Durch solche Systeme ist es beispielsweise möglich, im Winter einen Raum zu heizen und im Sommer zu kühlen. Dabei wird im Wesentlichen dieselbe Technologie verwendet. Hierzu nutzen Flächentemperiersysteme für die Wärmeübertragung beispielsweise wasserdurchströmte Rohrleitungen aus flexiblem, meist vernetztem Polyethylen.

Neben dieser doppelten Verwendungsmöglichkeit haben Flächentemperiersysteme weitere Vorteile. Die Installation von Flächentemperiersystemen erlaubt eine effiziente Nutzung von Räumen, weil das gesamte System in Böden, Wänden oder Decken integriert ist. Dies gestattet eine gestalterische Freiheit in der Planung und Ausgestaltung von Räumen.

Während am Markt unterschiedliche Systeme zur Verfügung stehen, die einen Einbau von Heiz- und Kühlsystemen in Neubauten ermöglichen, besteht häufig auch der Wunsch nach einem nachträglichen Einbau in Altbauten. Bei Neubauten ist ein Einbau von Heiz- und Kühlsystemen schon zu einem frühen Zeitpunkt planbar. In Altbauten hingegen ist eine bestimmte Raumgeometrie von vornherein vorgegeben und schränkt somit die Verwendung von Flächentemperiersystemen stark ein. Dies erfordert wiederum eine besondere Flexibilität der Systeme, um überhaupt einen Einbau in Altbauten zu ermöglichen. Eine Maßgabe besteht insbesondere darin, möglichst eine geringe Aufbauhöhe zu erzielen. Zudem kann es sinnvoll sein, sowohl einen Heizwie auch einen Kühlkreislauf separat zu realisieren. Von besonderer Bedeutung beim nachträglichen Einbau in Altbauten ist es zudem, Heiz- und Kühlsysteme schnell einbauen zu können, sodass die betroffenen Räume möglichst bald wieder benutzt und betreten werden können.

Aufgabe der vorliegenden Erfindung ist es, ein möglichst flexibles und einfach zu montierendes Flächentemperiersystem zur Kühlung oder Heizung von Decken, Wänden oder Böden eines Gebäudes zu beschreiben.

Erfindungsgemäß umfasst das Flächentemperiersystem zur Kühlung oder Heizung von Decken, Wänden oder Böden eines Gebäudes eine Verlegeplatte, in welcher erste Rohrführungskanäle mit einem ersten Durchmesser und zweite Rohrführungskanäle mit einem von dem ersten Durchmesser unterschiedlichen, zweiten Durchmesser eingebracht sind. Die ersten Rohrführungskanäle sind zur Aufnahme von Rohren mit einem ersten Rohrdurchmesser und die zweiten Rohrführungskanäle zur Aufnahme von Rohren mit einem von dem ersten Rohrdurchmesser unterschiedlichen, zweiten Rohrdurchmesser ausgebildet. Es ist eine wärmeleitende Befestigungsplatte vorgesehen mit einem Kanal, der einen ersten Innendurchmesser zur Aufnahme von Rohren mit dem ersten Rohrdurchmesser oder einen zweiten Innendurchmesser zur Aufnahme von Rohren mit dem zweiten Rohrdurchmesser aufweist, wobei die Befestigungsplatte durch Festlegen einer Wandung des Kanals in einem ersten Rohrführungskanal oder in einem zweiten Rohrführungskanal mit der Verlegeplatte verbindbar ist. In dem Kanal der Befestigungsplatte ist ein flexibles Aufnahmeelement angeordnet und dazu eingerichtet, Rohre zweier unterschiedlicher Rohrdurchmesser mit der Befestigungsplatte innerhalb des Kanals zu fixieren.

Bevorzugt wird die Verlegeplatte mit den Rohrführungskanälen in einem Raum, beispielsweise als Trockenverlegesystem in eine Dämmschicht, auf dem Boden ausgelegt. Mit Hilfe der Rohrführungskanäle ist der Verlauf der Rohre, wie sie für ein Heiz- und Kühlsystem verwendet werden, vorgegeben. Die Verlegeplatte kann unterschiedliche Materialien oder Materialkombinationen aufweisen. Diese umfassen etwa Holz, Kunststoff und Verbundwerkstoffe. Bevorzugt weist die Verlegeplatte auch ein Dämmmaterial und/oder wasserabweisende Schichten auf. Die ersten Rohrführungskanäle und die zweiten Rohrführungskanäle sind jeweils als etwa halbzylinderförmige Vertiefungen in der Verlegeplatte ausgebildet. Die Rohre werden in den Rohrführungskanälen werkzeuglos festgelegt. Beispielsweise verrasten die Rohre oder sind in die Rohrführungskanäle einklemmbar.

Dadurch, dass die ersten Rohrführungskanäle und die zweiten Rohrführungskanäle unterschiedlich dimensioniert sind, können flexibel Rohre mit zwei unterschiedlichen Durchmessern mit ein und derselben Verlegeplatte verwendet. Dadurch können beispielsweise unterschiedliche Leistungsstufen verwirklicht werden. Dies bedeutet, dass je nach Wahl des Rohrdurchmessers mehr oder weniger thermische Energie übertragen werden kann. Dies erhöht die Flexibilität des Flächentemperiersystems. Durch den gewählten Aufbau lässt sich das Flächentemperiersystem als Trockensystem verwenden und entsprechend schnell mittels Trockenestrichen verbauen. Für die Verwendung von unterschiedlichen Rohrdurchmessern muss lediglich eine Art von Verlegeplatte hergestellt werden. Dadurch ist möglich, weniger Bauteile vorhalten zu müssen. Dies spart Herstellungskosten wie auch Lagerkosten ein.

Gemäß einer Ausgestaltung verlaufen die ersten Rohrführungskanäle parallel versetzt zu den zweiten Rohrführungskanälen. Dadurch ist es beispielsweise möglich, Rohre mit unterschiedlichen Durchmessern gleichzeitig in die Verlegeplatte einzusetzen.

Gemäß einer weiteren Ausgestaltung überkreuzen sich die ersten Rohrführungskanäle und die zweiten Rohrführungskanäle zumindest teilweise, insbesondere unter einem Winkel von etwa 90°. Dadurch können entweder die ersten Rohrführungskanäle oder die zweiten Rohrführungskanäle verwendet werden. Typischerweise werden in einem Flächentemperiersystem mehrere Verlegeplatten montiert. Bei der Montage muss eine Verlegeplatte lediglich so rotiert werden, dass entweder die ersten Rohrführungskanäle oder die zweiten Rohrführungskanäle verwendet werden können. Somit können mehrere Verlegeplatten der beschriebenen Art einfach zu einer Fläche kombiniert werden, wobei die ersten oder zweiten Rohrführungskanäle fluchtend zueinander liegen.

Gemäß einer weiteren Ausgestaltung weist die Verlegeplatte eine oder mehrere Kennzeichnungen zum Unterscheiden der ersten Rohrführungskanäle und der zweiten Rohrführungskanäle auf. Unter dem Begriff Kennzeichnung sind jegliche Symbole oder Zeichen zu verstehen, die geeignet sind, die ersten Rohrführungskanälen von den zweiten Rohrführungskanälen zu unterscheiden. Auch ist es denkbar, alternativ oder zusätzlich unterschiedliche Farben zum Verdeutlichen der unterschiedlichen Rohrführungskanäle zu verwenden. Dies ermöglicht es einem Monteur beim Verlegen der Platte und beim anschließenden Verbau der Rohre in der Verlegeplatte schnell zu erkennen, welche Rohrführungskanäle benötigt werden.

Das Flächentemperiersystem weist eine wärmeleitende Befestigungsplatte mit einem Kanal auf, wobei der Kanal einen ersten Innendurchmesser zur Aufnahme von Rohren mit dem ersten Rohrdurchmesser oder einen zweiten Innendurchmesser zur Aufnahme von Rohren mit dem zweiten Rohrdurchmesser aufweist. Die Befestigungsplatte ist durch Festlegen einer Wandung des Kanals in einem ersten Rohrführungskanal oder in einem zweiten Rohrführungskanal mit der Verlegeplatte verbindbar. Die Befestigungsplatte wird in einen Rohrführungskanal eingelegt und dort befestigt. Beispielsweise wird die Befestigungsplatte mit der Wandung des Kanals in einen entsprechenden Rohrführungskanal eingepresst und/oder in diesem verrastet. Die Wandung des Kanals ist dabei bezüglich eines Außendurchmessers so an die ersten Rohrführungskanäle oder zweiten Rohrführungskanäle angepasst, dass die Befestigungsplatte mechanisch sicher an der Verlegeplatte festlegbar ist, ohne beispielsweise bei einer Wand- oder Deckenmontage herauszufallen. Die Rohre werden nicht direkt in die Verlegeplatte, sondern über die Befestigungsplatte mit der Verlegeplatte verbunden. Der Kanal der Befestigungsplatte ist bevorzugt so ausgebildet, dass er die entsprechenden Rohre mit dem ersten bzw. zweiten Rohrdurchmesser fixieren kann.

Die Befestigungsplatte ist somit ein weiteres modulares Element des Flächentemperierungssystems. Auf diese Weise können durch Wahl unterschiedlicher Befestigungsplatten Rohre mit dem ersten Rohrdurchmesser oder mit dem zweiten Rohrdurchmesser in dem Flächentemperierungssystem verbaut werden. Dazu müssen lediglich unterschiedliche Befestigungsplatten gefertigt und als modulare Elemente angeboten werden.

Zudem weist das Flächentemperiersystem ein flexibles Aufnahmeelement auf, welches in dem Kanal der Befestigungsplatte angeordnet ist und dazu eingerichtet ist, Rohre zweier unterschiedlicher Rohrdurchmesser mit der Befestigungsplatte innerhalb des Kanals zu fixieren. Analog zu oben dient das Aufnahmeelement der sicheren Festlegung der Rohre in einem entsprechenden Rohrführungskanal. Dadurch kann eine einzige Befestigungsplatte für die Installation von Rohren mit unterschiedlichen Rohrdurchmessern verwendet werden. Dadurch ist eine weitere Flexibilität bei der Installation des Flächentemperierungssystems möglich.

In einer Ausgestaltung weist die Befestigungsplatte Wärmeleitlamellen auf. Die Wärmeleitlamellen stehen in Wärmeleitkontakt mit den Rohren und erlauben somit eine flächenhafte Wärmeabstrahlung beziehungsweise Kühlwirkung des Flächentemperierungssystems. Bevorzugt weist die Befestigungsplatte ein Material mit hoher Wärmeleitfähigkeit auf. Geeignete Materialien sind unter anderem Metalle.

Gemäß einer weiteren Ausgestaltung weist das Flächentemperiersystem ein weiteres flexibles Aufnahmeelement auf, welches in einem ersten Rohrführungskanal oder einem zweiten Rohrführungskanal angeordnet ist und dazu eingerichtet ist, Rohre zweier unterschiedlicher Rohrdurchmesser mit der Verlegeplatte innerhalb des entsprechenden Rohrführungskanals zu fixieren. Mittels des weiteren Aufnahmeelements können Rohre zweier unterschiedlicher Durchmesser, beispielsweise des ersten und zweiten Rohrdurchmessers, in der Verlegeplatte sicher fixiert werden. Das Fixieren der Rohre kann direkt durch Eindrücken oder Einklemmen der Rohre erfolgen. Alternativ kann das flexible Aufnahmeelement auch außerhalb der ersten Rohrführungskanäle beziehungsweise zweiten Rohrführungskanäle angeordnet sein, um die Rohre entlang des entsprechenden Rohrführungskanals zu befestigen.

Gemäß einer weiteren Ausgestaltung weist das Flächentemperiersystem ein weiteres flexibles Aufnahmeelement auf, welches in einem ersten Rohrführungskanal oder einem zweiten Rohrführungskanal angeordnet ist und dazu eingerichtet ist, die Befestigungsplatte mit dem Kanal innerhalb des entsprechenden Rohrführungskanals zu fixieren. Eine Wandung des Kanals ist dabei so hinsichtlich ausgebildet, dass dies mittels dem weiteren flexiblen Aufnahmeelement innerhalb des entsprechenden Rohrführungskanals fixiert werden kann. Beispielsweise kann dies durch Anpassen eines Außendurchmessers des Kanals geschehen.

In einer Ausgestaltung weist das flexible Aufnahmeelement eine Längsachse auf, entlang derer sich Noppen erstrecken. Mit Hilfe der Noppen lassen sich Rohre mit wenigstens zwei unterschiedlichen Rohrdurchmessern sicher an der Verlegeplatte bzw. der Befestigungsplatte befestigen. Alternativ oder zusätzlich lässt sich die Befestigungsplatte mittels der Noppen in einem entsprechenden Rohrführungskanal befestigen. Die Noppen können als separates Element mit dem Aufnahmeelement verbunden sein oder in Form einer Materialverdickung ein strukturelles Merkmal des Aufnahmeelements selbst sein.

In einer Ausgestaltung liegen je zwei Noppen entlang der Längsachse des flexiblen Aufnahmeelements einander gegenüber.

In einer Ausgestaltung liegen je zwei Noppen entlang der Längsachse des flexiblen Aufnahmeelements einander derart gegenüber, dass diese auf Lücke alternierend angeordnet sind.

In einer Ausgestaltung liegen sich je zwei Noppen entlang der Längsachse des flexiblen Aufnahmeelements derart gegenüber, dass diese entlang einer Verbindungsachse angeordnet sind.

In einer Ausgestaltung weist das flexible Aufnahmeelement entlang seiner Längsachse eine durchgehende partielle Verdickung auf, die dazu eingerichtet ist, das Rohr zu befestigen. Diese Verdickung wird bevorzugt im Querschnitt als einem "griechischen Omega" ähnlich gestaltet und weist einen ersten Bereich zur Aufnahme eines Rohres oder eines Kanals und einen zweiten Bereich auf, der sich in Form eines Halses verengt. Durch den verengten zweiten Bereich wird das Rohr oder der Kanal in das Aufnahmeelement eingedrückt und dann gehalten.

In einer Ausgestaltung weisen die Noppen einen flexiblen Kunststoff auf. Der flexible Kunststoff ist so gewählt, dass die Noppen bei Installation eines Rohres leicht nachgeben. Aufgrund dieser Flexibilität des Materials lassen sich insbesondere Rohre mit unterschiedlichen Rohrdurchmessern installieren. Die verwendbaren Durchmesser sind damit lediglich von der Materialwahl abhängig.

In einer Ausgestaltung weist die Befestigungsplatte Aussparungen oder Löcher auf. Die Aussparungen oder Löcher sind dabei so ausgestaltet, dass sie jeweils in eine Noppe der Verlegeplatte eingreifen. Mittels der Aussparungen oder Löcher ist eine zusätzliche Befestigung der Befestigungsplatte mit der Verlegeplatte ermöglicht. Zusätzlich lassen sich unterschiedliche Rohrdurchmesser mit dem Flächentemperierungssystem verwenden.

In einer Ausgestaltung ist das flexible Aufnahmeelement als Ausbuchtung in der Befestigungsplatte oder in den Rohrführungskanälen ausgebildet. Eine Ausbuchtung stellt ein mit dem Aufnahmeelement fest verbundenes Element dar, welches beispielsweise durch Einstanzen oder Eindrücken des Aufnahmeelements an geeigneten Stellen gefertigt werden kann. Bevorzugt weist dazu das Aufnahmeelement ein metallisches Material, wie etwa ein Blech auf, das an bestimmten Stellen eingestanzt oder eingedrückt ist. Die Stellen können, den erwähnten Noppen ähnlich, einander gegenüber liegen. Es ist weiterhin auch vorgesehen, die Ausbuchtung im Querschnitt der partiellen Verdickung ähnlich zu gestalten.

In einer Ausgestaltung ist das flexible Aufnahmeelement als separates Element ausgestaltet. Das flexible Aufnahmeelement als separates Element auszugestalten erlaubt eine weitere Flexibilität. Gewissermaßen ist das separate Element dabei ein weiteres Modul, das zum Flächentemperierungssystem verbaut werden kann. Insbesondere kann das flexible Aufnahmeelement in Form eines Kunststoffes in die Befestigungsplatte oder die Rohrführungskanäle der Verlegeplatte aufgeschäumt werden.

In einer Ausgestaltung umfasst das flexible Aufnahmeelement wenigstens zwei in die Befestigungsplatte oder die Verlegeplatte einlegbare Verschalungen zur Aufnahme des jeweils ersten oder des zweiten Rohrdurchmessers. Die einlegbaren Verschalungen weisen bevorzugt einen Außendurchmesser auf, der eine Montage in dem Kanal der Befestigungsplatte oder in einem der Rohrführungskanäle der Verlegeplatte erlaubt. Dabei ist dann der Innendurchmesser einer Verschalung zur Aufnahme eines Rohres mit dem ersten Rohrdurchmesser oder mit dem zweiten Rohrdurchmesser ausgestaltet. Alternativ kann wiederum ein Kanal der Befestigungsplatte aufgenommen werden.

In einer Ausgestaltung weist das flexible Aufnahmeelement einen rechteckigen, kurvenförmigen oder zackenförmigen Querschnitt auf. Die konkrete Wahl des Querschnitts des Aufnahmeelements richtet sich nach der entsprechenden Verwendung als Decken-, Wand- oder Bodenelement. Die Maßgabe ist hierbei, dass beispielsweise bei Verwendung des Flächentemperiersystems als Wandelement, ein Rohr oder eine Befestigungsplatte so befestigt sein muss, dass diese nicht durch Wirkung der Schwerkraft herausfallen können.

Weitere Vorteile und Funktionen sind in den Unteransprüchen und der nachfolgenden, ausführlichen Beschreibung von Ausführungsbeispielen beschrieben. Die Ausführungsbeispiele werden unter Zuhilfenahme der angehängten Figuren nachfolgend beschrieben.

In den Figuren zeigen:
- Figur 1: eine schematische Darstellung eines Ausführungsbeispiels einer Verlegeplatte,
- Figur 2: eine schematische Darstellung eines Ausführungsbeispiels einer Befestigungsplatte für die Verlegeplatte,
- Figur 3: eine perspektivische Darstellung eines Flächentemperiersystems,
- Figuren 4A bis 4C: schematisches Darstellungen weiterer Ausführungsbeispiele von Verlegeplatten mit unterschiedlichen flexiblen Aufnahmeelementen,
- Figuren 5A und 5B: schematisches Darstellungen weiterer Ausführungsbeispiele von Befestigungsplatten mit unterschiedlichen flexiblen Aufnahmeelementen und
- Figur 6: schematische Darstellung eines Ausführungsbeispiels einer Befestigungsplatte mit einem einlegbaren, flexiblen Aufnahmeelement.

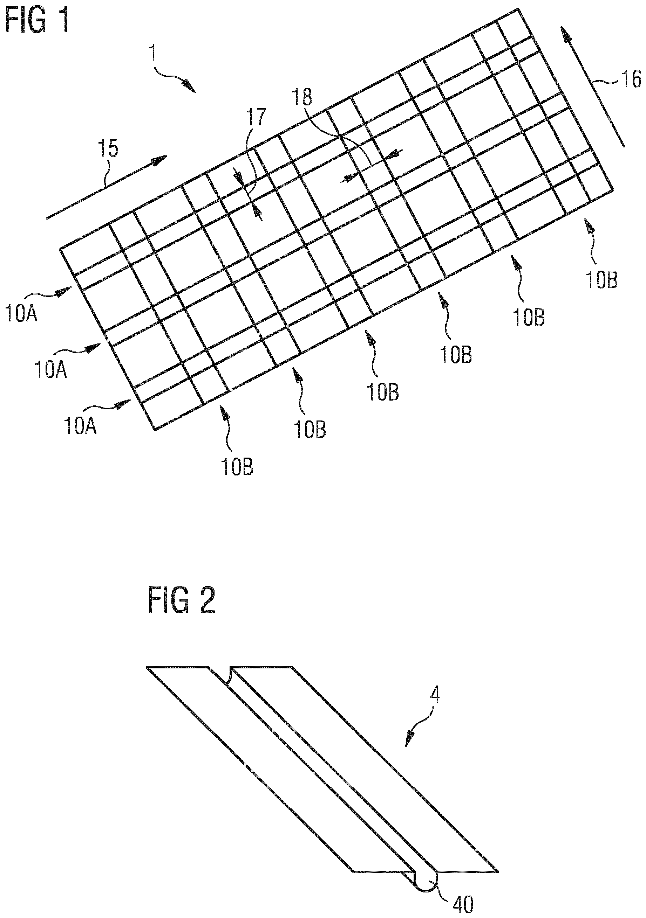

Figur 1 zeigt schematisch eine Verlegeplatte 1 in Draufsicht von oben. Die Verlegeplatte 1 ist aus Schaumkunststoff, beispielsweise PS (Polystyrol) oder EPS (expandiertes Polystyrol) hergestellt. Alternativ kommen andere Werkstoffe wie Polyethylenschaum sowie Mineral- oder Holzfaserplatten infrage. In die Verlegeplatte 1 sind erste Rohrführungskanäle 10A sowie zweite Rohrführungskanäle 10B eingebracht. Die Rohrführungskanäle 10A und 10B geben einen Verlauf für Rohre auf, die zum Heizen oder Kühlen mit einem Medium, insbesondere Wasser, durchströmt werden. Die Rohrführungskanäle 10A und 10B sind halbzylinderförmige Ausnehmungen. Die ersten Rohrführungskanäle 10A erstrecken sich parallel zu einer ersten Erstreckungsrichtung 15, die mit einer Längsrichtung der Verlegeplatte 1 zusammenfällt. Die zweiten Rohrführungskanäle 10B verlaufen parallel zu einer zweiten Erstreckungsrichtung 16, welche mit einer Querrichtung der Verlegeplatte 1 zusammenfällt. Die beiden Erstreckungsrichtungen 15 und 16 sind in etwa 90° zueinander ausgerichtet, so dass sich die Rohrführungskanäle 10A und 10B überkreuzen. Die ersten Rohrführungskanäle 10A haben einen ersten Durchmesser 17, während die zweiten Rohrführungskanäle 10B einen zweiten Durchmesser 18 haben. Der erste Durchmesser 17 ist kleiner als der zweite Durchmesser 18.

Mittels der Verlegeplatte 1 können somit entweder Rohre mit einem ersten Rohrdurchmesser, der zu dem ersten Durchmesser 17 korrespondiert, oder Rohre mit einem zweiten Rohrdurchmesser, welcher zu dem zweiten Durchmesser 18 korrespondiert, aufgenommen werden. Die Rohre werden in diesem Ausführungsbeispiel nicht direkt, sondern mittels Befestigungsplatten 4, von denen eine schematisch in Figur 2 dargestellt ist, an der Verlegeplatte 1 befestigt.

Die Befestigungsplatte 4 ist aus Metallblech gefertigt und hat Wärmeleitlamellen. Die Befestigungsplatte 4 hat eine hohe Wärmeleitfähigkeit. In der Befestigungsplatte 4 ist ein Kanal 40 geformt. Der Kanal 40 ist hinsichtlich eines Außendurchmessers so angepasst, dass dieser hinsichtlich seiner Wandung in einem ersten Rohrführungskanal 10A befestigt werden kann. Der Kanal 40 hat weiter einen ersten Innendurchmesser, der zur Aufnahme von Rohren mit einem ersten Rohrdurchmesser geeignet ist. Alternativ ist der Kanal 40 hinsichtlich dessen Außendurchmesser zur Befestigung in einem zweiten Rohrführungskanal 10B angepasst und hat einen zweiten Innendurchmesser, der zur Aufnahme von Rohren mit einem ersten Rohrdurchmesser geeignet ist. Der Kanal 40 ist jeweils so ausgebildet, dass ein entsprechendes Rohr darin klemmend oder verrastend befestigt werden kann.

Mittels der Verlegeplatte 1 ist es nun möglich, Befestigungsplatten 4 mit dem ersten oder dem zweiten Innendurchmesser des Kanals 40 zu verwenden, um Rohre mit dem ersten Rohrdurchmesser oder Rohre mit dem zweiten Rohrdurchmesser zu verwenden. Somit können mittels einer Verlegeplatte 1 auf einfache Art und Weise Rohre mit unterschiedlichen Rohrdurchmessern, beispielsweise 14 mm und 16 mm, fixiert werden.

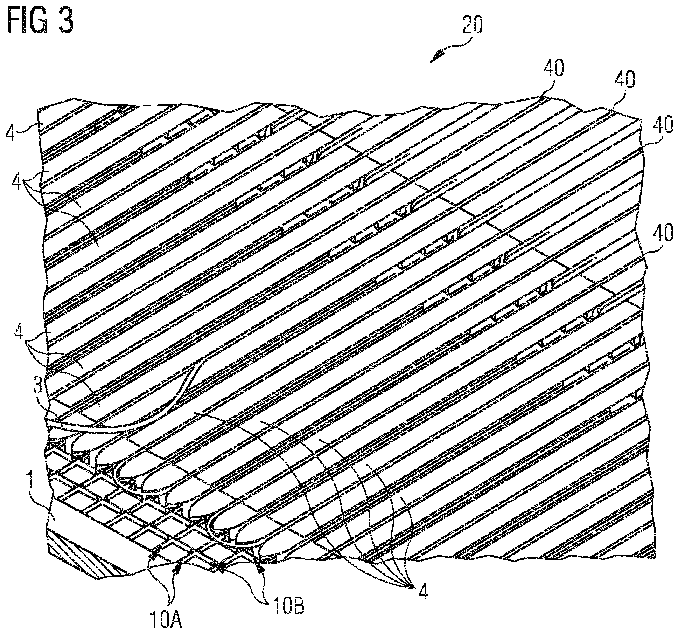

Die Figur 3 zeigt perspektivisch ein Flächentemperiersystem 20 mit mehreren Verlegeplatten 1 und Befestigungsplatten 4 der oben beschriebenen Art. Die Verlegeplatten 1 sind fluchtend zueinander angeordnet, wobei in ersten Rohrführungskanälen 10A die Befestigungsplatten 4 festgelegt sind. In Bereichen ohne Befestigungsplatten 4 sind Verbindungen 11 in den Verlegeplatten 1 vorgesehen, welche zwei oder mehrere Rohrführungskanäle 10A oder 10B verbinden. Somit lassen sich Heiz- bzw. Kühlkreisläufe bilden. In die Kanäle 40 sind Rohre 3 mit dem ersten Rohrdurchmesser eingelegt und fixiert. Es besteht die Möglichkeit, Verläufe der Rohrführungskanäle 10A und 10B mittels Schneidwerkzeugen anzupassen, um weitere oder andere Verbindungen 11 herzustellen. Nach Verlegen der Rohre 3 wird das montierte Flächentemperiersystem 20 mit einem Estrich versiegelt. Dabei wird bevorzugt ein Trockenestrich verwendet.

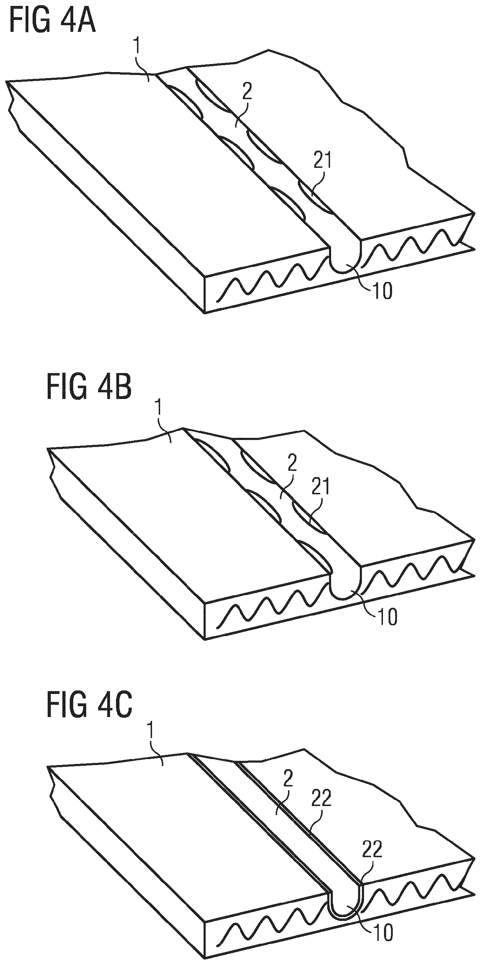

In einem alternativen, nicht dargestellten Ausführungsbeispiel, welches nicht unter den Wortlaut des Anspruchs 1 fällt, werden die Rohre 3 ohne Befestigungsplatten 4 direkt in die Verlegeplatten 1 gemäß dem in Figur 1 gezeigten Ausführungsbeispiel gelegt. Hierbei werden diese in den entsprechenden Rohrführungskanälen 10A oder 10B der Verlegeplatte 1 verrastet oder verklemmt, so dass diese unverlierbar befestigt sind. Wieder können mehrere Verlegeplatten 1 kombiniert und nach der Montage mit Estrich versiegelt werden. Die Figuren 4A, 4B und 4C zeigen jeweils schematische Ausschnitte weiterer Ausführungsbeispiele von Verlegeplatten 1 mit Rohrführungskanälen 10. Der gezeigte Rohrführungskanal 10 entspricht einem ersten Rohrführungskanal 10A oder alternativ einem zweiten Rohrführungskanal 10B gemäß Figur 1. Dabei weisen jeweils die Rohrführungskanäle 10 ein flexibles Aufnahmeelement 2 auf. Aufgrund der Flexibilität des Aufnahmeelements 2 ist es möglich, ein Rohr durch Eindrücken in den Rohrführungskanal 10 zu befestigen. Alternativ ermöglicht das Aufnahmeelement 2, ein Rohr mit zwei unterschiedlichen Rohrdurchmessern, beispielsweise mit dem ersten oder zweiten Rohrdurchmesser, in ein und demselben Rohrführungskanal 10 zu fixieren.

In Figur 4A ist das flexible Aufnahmeelement 2 in Form von einander gegenüberliegenden Noppen 21 realisiert. Diese Noppen 21 sind entlang eines Rohrführungskanals 10 angeordnet und liegen einander entlang der Längsachse des Rohrführungskanals 10 gegenüber. Alternativ dazu kann das flexible Aufnahmeelement 2 auch auf dem Boden des Rohrführungskanals 10 vorgesehen sein, beispielsweise durch Aufschäumen eines Kunststoffes. Bevorzugt werden die Noppen 21 aus einem flexiblen Material wie einem Kunststoff gefertigt.

Figur 4B zeigt einen Ausschnitt einer weiteren Verlegeplatte 1 mit einem Rohrführungskanal 10, wobei jedoch abweichend zu dem Ausführungsbeispiel gemäß Figur 4A Noppen 21 des flexiblen Aufnahmeelements 2 so entlang der Längsachse des Rohrführungskanals 10 angeordnet sind, dass diese jeweils sich auf Lücke gegenüber angeordnet sind.

Figur 4C zeigt einen Ausschnitt einer weiteren Verlegeplatte 1 mit einem flexiblen Aufnahmeelement 2, welches eine partielle Verdickung 22 entlang der Längsachse des Rohrführungskanals 10 hat. Die partielle Verdickung 22 ist so ausgeführt, dass sie sich zum Boden des Rohrführungskanals 10 hin verdickt, während sie sich zu den offenen Enden an der Oberfläche der Verlegeplatte 1 hin in Form eines Hufeisens verjüngt. Der Rohrführungskanal 10 kann jedoch auch im Wesentlichen U-förmig sein und die partielle Verdickung an den Schenkeln der U-Form aufweisen. Bevorzugt wird die partielle Verdickung mittels Aufschäumen eines geeigneten Materials, etwa eines Schaummaterials oder Polymers erzielt. Damit ist es möglich, ein Rohr durch Klemmwirkung zu befestigen. Die partielle Verdickung 22 umfasst bevorzugt ebenfalls einen flexiblen Kunststoff, sodass auch Rohre verschiedener Durchmesser befestigbar sind.

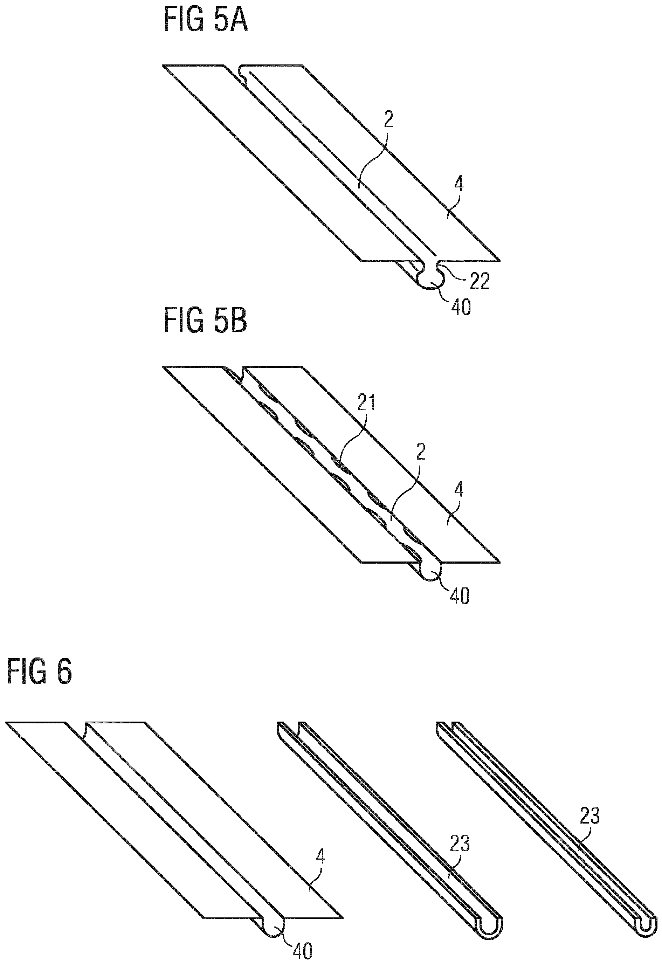

Verlegeplatten 1 mit einem flexiblen Aufnahmeelement 2 wie oben beschrieben müssen nicht nur der Aufnahme von Rohren dienen, sondern können, wie bereits anhand der Figuren 1 bis 3 beschrieben, auch der Aufnahme von Befestigungsplatten 4 dienen. Beispielsweise kann eine Befestigungsplatte 4 gemäß der Figur 2 oder eine der nachfolgend beschriebenen Befestigungsplatten 4 gemäß den Figuren 5A, 5B oder 6 fixiert werden.

Die Figuren 5A und 5B zeigen schematisch weitere Ausführungsbeispiele von Befestigungsplatten 4 mit einem Kanal 40.

Die Befestigungsplatte 4 nach Figur 5A hat eine zu der in Figur 4C gezeigten partiellen Verdickung 22 ähnliche Struktur. Die partielle Verdickung 22 ist in diesem Fall beispielsweise durch eine dem griechischen Buchstaben Ω ähnliche Form ausgeführt.

In Figur 5B hingegen weist der Kanal 40 der Befestigungsplatte 4 das Aufnahmeelement 2 auf, wobei dieses ähnlich den Ausführungsbeispielen gemäß den Figuren 4A und 4B Noppen 21 hat. Gezeigt ist wiederum ein alternierendes auf Lücke Gegenüberliegen der Noppen 21. Alternativ können diese einander jedoch auch direkt gegenüberliegen.

Figur 6 zeigt eine weitere Ausführungsform einer Befestigungsplatte 4 mit einem Kanal 40. Durch den U-förmigen Kanal 40 ist ein Außenrohrdurchmesser vorgegeben. In diesem Außenrohrdurchmesser lassen sich verschiedene separate Verschalungen 23 einlegen und befestigen. Diese Verschalungen 23 weisen als separates Element oder Modul verschiedene Innendurchmesser auf und sind so zur Aufnahme von Rohren unterschiedlicher Rohrdurchmesser geeignet. Bevorzugt ist dabei der Außendurchmesser einer Verschalung 23 so gewählt, dass diese in den Durchmesser des Kanals 40 passt und sich dort fixieren lässt.

In eine Befestigungsplatte 4 sind somit mittels der Module bzw. unterschiedlichen Verschalungen 23 auch unterschiedliche Rohre mit wenigstens dem ersten und zweiten Rohrdurchmesser verwendbar.

### Bezugszeichenliste

- 1: Verlegeplatte
- 2: Aufnahmeelement
- 3: Rohr
- 4: Befestigungsplatte
- 10, 10A, 10B: Rohrführungskanal
- 11: Verbindung
- 12: erster Durchmesser
- 13: zweiter Durchmesser
- 15: erste Erstreckungsrichtung
- 16: zweite Erstreckungsrichtung
- 17: erster Durchmesser
- 18: zweiter Durchmesser
- 20: Flächentemperiersystem
- 21: Noppe
- 22: partielle Verdickung
- 23: Verschalung
- 40: Kanal

## Patentansprüche

1. Flächentemperiersystem (20) zur Kühlung oder Heizung von Decken, Wänden oder Böden eines Gebäudes, aufweisend eine Verlegeplatte (1), in welcher erste Rohrführungskanäle (10A) mit einem ersten Durchmesser und zweite Rohrführungskanäle (10B) mit einem von dem ersten Durchmesser unterschiedlichen zweiten Durchmesser eingebracht sind, wobei die ersten Rohrführungskanäle (10A) zur Aufnahme von Rohren (3) mit einem ersten Rohrdurchmesser und die zweiten Rohrführungskanäle (10B) zur Aufnahme von Rohren (3) mit einem von dem ersten Rohrdurchmesser unterschiedlichen, zweiten Rohrdurchmesser ausgebildet sind; **dadurch gekennzeichnet, dass**
- eine wärmeleitende Befestigungsplatte (4) vorgesehen ist mit einem Kanal (40), der einen ersten Innendurchmesser zur Aufnahme von Rohren (3) mit dem ersten Rohrdurchmesser oder einen zweiten Innendurchmesser zur Aufnahme von Rohren (3) mit dem zweiten Rohrdurchmesser aufweist, wobei die Befestigungsplatte (4) durch Festlegen einer Wandung des Kanals (40) in einem ersten Rohrführungskanal (10A) oder in einem zweiten Rohrführungskanal (10B) mit der Verlegeplatte (1) verbindbar ist;
und
- in dem Kanal (40) der Befestigungsplatte (4) ein flexibles Aufnahmeelement (2) angeordnet und dazu eingerichtet ist, Rohre (3) zweier unterschiedlicher Rohrdurchmesser mit der Befestigungsplatte (4) innerhalb des Kanals (40) zu fixieren.

2. Flächentemperiersystem (20) nach Anspruch 1, wobei die ersten Rohrführungskanäle (10A) parallel versetzt zu den zweiten Rohrführungskanälen (10B) verlaufen.

3. Flächentemperiersystem (20) nach Anspruch 1, wobei sich die ersten Rohrführungskanäle (10A) und die zweiten Rohrführungskanäle (10B) zumindest teilweise überkreuzen, insbesondere unter einem Winkel von etwa 90°.

4. Flächentemperiersystem (20) nach einem der vorhergehenden Ansprüche, wobei die Verlegeplatte (1) eine oder mehrere Kennzeichnungen zum Unterscheiden der ersten Rohrführungskanäle (10A) und der zweiten Rohrführungskanäle (10B) aufweist.

5. Flächentemperiersystem (20) nach einem der Ansprüche 1 bis 4, aufweisend ein weiteres flexibles Aufnahmeelement (2), welches in einem ersten Rohrführungskanal (10A) oder einem zweiten Rohrführungskanal (10B) angeordnet ist und dazu eingerichtet ist, Rohre (3) zweier unterschiedlicher Rohrdurchmesser mit der Verlegeplatte (1) innerhalb des entsprechenden Rohrführungskanals (10A, 10B) zu fixieren.

6. Flächentemperiersystem (20) nach einem der Ansprüche 1 bis 5, aufweisend zumindest ein weiteres flexibles Aufnahmeelement (2), welches in einem ersten Rohrführungskanal (10A) oder einem zweiten Rohrführungskanal (10B) angeordnet ist und dazu eingerichtet ist, die Befestigungsplatte (4) mit dem Kanal (40) innerhalb des entsprechenden Rohrführungskanal (10A, 10B) zu fixieren.

7. Flächentemperiersystem (20) nach einem der Ansprüche 1 bis 6, welches zur Trockenverlegung, insbesondere mit einem Trockenestrich, ausgebildet ist.

8. Flächentemperiersystem (20) nach einem der Ansprüche 1 bis 7, bei dem die Verlegeplatte (1) als Schaumkunststoffplatte, insbesondere aus Polystyrol, aus expandiertem Polystyrol oder aus Polyethylenschaum; als Mineralfaserplatte oder als Holzfaserplatten ausgestaltet ist.

9. Flächentemperiersystem (20) nach einem der Ansprüche 1 bis 8, wobei die ersten und zweiten Rohrführungskanäle (10A, 10B) als halbzylinderförmige Ausnehmungen in der Verlegeplatte (1) ausgestaltet sind.

## Claims

1. Surface temperature-control system (20) for cooling or heating ceilings, walls or floors of a building, having an installation board (1) in which first pipe routing ducts (10A), having a first diameter, and second pipe routing ducts (103), having a second diameter differing from the first diameter, are incorporated, wherein the first pipe routing ducts (10A) are configured for receiving pipes (3) having a first pipe diameter, and the second pipe routing ducts (10B) are configured for receiving pipes (3) having a second pipe diameter differing from the first pipe diameter;
**characterized in that**
- a thermally conducting fastening board (4) is provided, having a duct (40) which has a first internal diameter for receiving pipes (3) having the first pipe diameter, or a second internal diameter for receiving pipes (3) having the second pipe diameter, wherein the fastening board (4) is connectable to the installation board (1) by securing a wall of the duct (40) in a first pipe routing duct (10A) or in a second pipe routing duct (10B); and
- a flexible receptacle element (2) is arranged in the duct (40) of the fastening board (4) and adapted so as to secure pipes (3) of two different pipe diameters to the fastening board (4) within the duct (40).

2. Surface temperature-control system (20) according to claim 1, wherein the first pipe routing ducts (10A) run so as to be offset in parallel to the second pipe routing ducts (10B).

3. Surface temperature-control system (20) according to claim 1, wherein the first pipe routing ducts (10A) and the second pipe routing ducts (10B) at least partially intersect, in particular at an angle of about 90°.

4. Surface temperature-control system (20) according to one of the preceding claims, wherein the installation board (1) has one or a plurality of identification markings for differentiating the first pipe routing ducts (10A) and the second pipe routing ducts (103).

5. Surface temperature-control system (20) according to one of claims 1 to 4, comprising another flexible receptacle element (2), which is disposed in a first pipe routing duct (10A) or a second pipe routing duct (10B) and which is adapted so as to secure pipes (3) of two different pipe diameters to the installation board (1) within the corresponding pipe routing duct (10A, 10B).

6. Surface temperature-control system (20) according to one of claims 1 to 5, comprising at least one further flexible receptacle element (2), which is disposed in a first pipe routing duct (10A) or a second pipe routing duct (10B) and which is adapted so as to secure the fastening board (4) to the duct (40) within the corresponding pipe routing duct (10A, 10B).

7. Surface temperature-control system (20) according to one of claims 1 to 6, which is configured for dry installation, in particular by way of a dry screed.

8. Surface temperature-control system (20) according to one of claims 1 to 7, in which the installation board (1) is formed as a foamed plastics board, in particular of polystyrene, of expanded polystyrene, or of foamed polyethylene; as a mineral-fiber board, or as a wood-fiber board.

9. Surface temperature-control system (20) according to one of claims 1 to 8, wherein the first and second pipe routing ducts (10A, 10B) are designed as semicylindrical recesses in the installation board (1).

## Revendications

1. Système(20)de contrôle de la température de surface pour le refroidissement ou le chauffage des plafonds, des murs ou des planchers d'un bâtiment, comprenant une plaque de pose (1), dans laquelle des premiers canaux de guidage des conduits (10A) présentant un premier diamètre et des deuxièmes canaux de guidage des conduits (10B) présentant un deuxième diamètre différent du premier diamètre sont intégrées, les premiers canaux de guidage des conduits (10A) étant conçus pour recevoir des tubes (3) présentant un premier diamètre de tube et les deuxièmes canaux de guidage (10B) de conduits pour recevoir des tubes (3) ayant un deuxième diamètre de tube différent du premier diamètre de tube,
**caractérisé en ce**
- **qu'**une plaque de fixation thermoconductrice (4) est prévue, avec un canal (40) qui a un premier diamètre interne destiné à recevoir des tubes (3) ayant le premier diamètre de tube ou un deuxième diamètre interne destiné à recevoir des tubes (3) ayant le deuxième diamètre de tube, ladite plaque de fixation (4) pouvant être reliée en fixant une paroi du canal (40) dans un premier canal de guidage de conduit (10A) ou dans un deuxième canal de guidage de conduit (10B) avec la plaque de pose (1) ; et
- dans le canal (40) de la plaque de fixation (4), un élément de réception flexible (2) est disposé et conçu pour fixer des tubes (3) de deux diamètres de tube différents avec la plaque de fixation (4) dans le canal (40).

2. Système de contrôle de la température de surface (20) selon la revendication 1, dans lequel les premiers canaux de guidage de conduit (10A) s'étendent de manière à être décalée en parallèle par rapport aux deuxièmes canaux de guidage de conduit (10B).

3. Système de contrôle de la température de surface (20) selon la revendication 1, dans lequel les premiers canaux de guidage de conduit (10A) et les deuxièmes canaux de guidage de conduit (10B) se croisent au moins partiellement, en particulier selon un angle d'environ 90°.

4. Système de contrôle de la température de surface (20) selon l'une quelconque des revendications précédentes, dans lequel la plaque de pose (1) présente une ou plusieurs marques destinées à distinguer les premiers canaux de guidage de conduit (10A) et les deuxièmes canaux de guidage de conduit (10B).

5. Système de contrôle de la température de surface (20) selon l'une des revendications 1 à 4, comprenant un autre élément (2) de réception flexible, qui est agencé dans un premier canal de guidage de conduit (10A) ou dans un deuxième canal de guidage de conduit (10B) et qui est configuré afin de fixer des tubes (3) de deux diamètres de tube différents à l'aide de plaque de pose (1) au sein du canal de guidage de conduit (10A, 10B).

6. Système de contrôle de la température de surface (20) selon l'une quelconque des revendications 1 à 5, comprenant au moins un autre élément de réception (2) flexible qui est agencé dans un premier canal de guidage de conduit (10A) ou dans un deuxième canal de guidage de conduit (10B) et qui est conçu pour fixer la plaque de fixation (4) à l'aide du canal (40) au sein du canal de guidage de conduit (10A, 10B).

7. Système de contrôle de la température de surface (20) selon l'une des revendications 1 à 6, qui est conçu pour une installation à sec, en particulier avec une chape sèche.

8. Système de contrôle de la température de surface (20) selon l'une quelconque des revendications 1 à 7, dans laquelle la plaque de pose (1) est une plaque en mousse plastique, en particulier en polystyrène, en polystyrène expansé ou en mousse de polyéthylène ; qui est conçue comme une plaque de fibres minérales ou comme des panneaux de fibres de bois.

9. Système de contrôle de la température de surface (20) selon l'une quelconque des revendications 1 à 8, dans lequel les premières et deuxièmes canaux de guidage de conduit (10A, 10B) sont développés comme des cavités semi-cylindriques dans la plaque de pose (1).
